(19) Europäisches Patentamt
European Patent Office
Office européen des brevets

(11) **EP 2 732 343 B1**

(12) **EUROPÄISCHE PATENTSCHRIFT**

(45) Veröffentlichungstag und Bekanntmachung des Hinweises auf die Patenterteilung:
**07.10.2020 Patentblatt 2020/41**

(21) Anmeldenummer: **12716318.6**

(22) Anmeldetag: **11.04.2012**

(51) Int Cl.:
**G05B 13/04** *(2006.01)*

(86) Internationale Anmeldenummer:
**PCT/EP2012/056496**

(87) Internationale Veröffentlichungsnummer:
**WO 2013/007405 (17.01.2013 Gazette 2013/03)**

(54) **AUTOMATISIERTE ADAPTIERUNG EINER KRAFTWERKSREGELUNG**

AUTOMATED ADAPTATION OF A POWER PLANT CONTROL

ADAPTATION AUTOMATISÉE D'UNE RÉGULATION DE CENTRALE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.07.2011 DE 102011079107**

(43) Veröffentlichungstag der Anmeldung:
**21.05.2014 Patentblatt 2014/21**

(73) Patentinhaber: **Siemens Aktiengesellschaft 80333 München (DE)**

(72) Erfinder:
• **GROGANZ, Julian**
  **88605 Meßkirch (DE)**
• **RUPP, Joachim**
  **76297 Stutensee (DE)**
• **WENDELBERGER, Klaus**
  **68789 St. Leon-Rot (DE)**

(56) Entgegenhaltungen:
**EP-A2- 1 488 863    DE-A1- 19 501 077
US-A- 5 268 834**

**EP 2 732 343 B1**

**Beschreibung**

Die Erfindung betrifft ein Verfahren zur automatischen Adaptierung einer Regelung einer technischen Anlage, insbesondere eines Kraftwerks, sowie ein Automatisierungssystem mit einer Regelung einer technischen Anlage.

Zu einer Automatisierung, insbesondere zu einer automatisierten Steuerung und/oder Regelung, von verfahrenstechnischen Prozessen bei technischen Anlagen, wie beispielsweise Dampfkraftwerke, werden üblicherweise Automatisierungssysteme eingesetzt.

Solche Automatisierungssysteme für technische Anlagen, welche in Form von in Leitsystemen implementierter Software zur Verfügung stehen, beinhalten - in Form von ein- oder mehrschleifigen Regelkreisen - Regelsysteme, mittels welcher die verfahrenstechnischen Prozesse bei diesen technischen Anlagen - meist auf Ebene von Teilsystemen - abgebildet werden und mittels welcher durch von den Regelsystemen angesteuerten Stellgliedern/-organen die technische Anlage geregelt/gesteuert gefahren wird.

Ein solcher, beispielsweise einschleifiger Regelkreis setzt sich dabei zusammen aus einer analogen messtechnischen Erfassung einer zu regelnden Prozessgröße (Regelgröße) sowie einem Einlesen der gemessenen Prozessgröße in das Automatisierungssystem über eine Analog/Digital (A/D) - Wandlung. Weiterhin sieht der Regelkreis meist einen Filter vor, mit dessen Hilfe ein Rauschen der gemessenen Prozessgröße beseitigt wird. Der Regelkreis gibt einen Sollwert (Führungsgröße) für die Prozessgröße vor und bildet eine Abweichung der Regelgröße von dem Sollwert (Regeldifferenz). Ein Regelalgorithmus (Regler) bestimmt aus der Regeldifferenz, wie ein Stellglied/-organ zu verfahren ist, damit sich die Regelgröße der Führungsgröße nähert (Stellsignal). Das Stellsignal wird über eine Digital/Analog (D/A) - Wandlung an das Stellglied/-organ des technischen Systems ausgegeben.

Beim Aufstellen solcher Regelkreise sind benutzerseitig überdies Regelkreisparameter, wie Übertragungsglieder, Zeitkonstanten und/oder Verstärkungsfaktoren auszuwählen bzw. einzustellen.

Zur Automatisierung eines Teilsystems einer technischen Anlage, beispielsweise eines Dampfkraftwerksblocks bei einem Dampfkraftwerk, ist es dabei erforderlich, eine Vielzahl solcher Regelkreise für dieses zu automatisierende Teilsystem aufzubauen.

Die Regelkreise des Teilsystems, beispielsweise eines Dampfkraftwerksblockes, sind dabei nicht unabhängig voneinander sondern vielmehr stark - auf Grund verfahrens-/prozesstechnischer Gegebenheiten (prozesstechnisch) - miteinander verkoppelt.

Beispielsweise wird die Regelung eines Druckes in einem Feuerraum des Dampfkraftwerksblockes über einen Saugzug stark durch die Regelung einer Frischluftzufuhr über den Frischlüfter in dem Dampfkraftwerksblock beeinflusst. Auch hat ein erhöhter Brennstoffmassenstrom in dem Dampfkraftwerksblock nicht nur eine erhöhte Dampfproduktion zur Folge, sondern er beeinflusst auch die Dampftemperatur in dem Dampfkraftwerksblock, die mit Hilfe von Einspritzungen konstant gehalten werden soll. Auch die Regelung des Speisewassermassenstroms mit Hilfe der Speisepumpe und die Regelung des Speisewasserdruckes mit Hilfe des Speisewasserregelventils stehen in Abhängigkeit zueinander.

Um eine hohe Regelgüte sowie eine hohe Anlagenstabilität erreichen zu können, müssen derartige prozesstechnisch gegebenen (Quer-)Kopplungen bei dem betrachteten Teilsystem in der Regelungstechnik wieder entkoppelt bzw. aufgebrochen werden.

Dies erfolgt regelungstechnisch durch die Verwendung von sogenannten Entkopplungsnetzwerken mit Entkopplungszweigen in den Regelstrukturen bzw. zwischen den Regelkreisen. Diese Entkopplungszweige beinhalten dabei sogenannte Entkopplungsglieder, beispielsweise DT1-Vorhalte- und/oder PTn-Verzögerungsglieder.

Je nach Art der tatsächlich vorliegenden, prozesstechnischen Verkoppelung muss entweder mit einem Verzögerungs- oder einem Vorhalteglied entkoppelt werden.

Über einen Vorhalte-/Verzögerungszweig mit einem Vorhalte-/Verzögerungsglied wirkt dabei eine Regeldifferenz einer bestimmten Prozessgröße dann nicht mehr nur auf das ihr zugewiesene Stellglied, sondern auch auf das Stellglied des gekoppelten Regelkreises.

Durch die koordinierte Aktion mit mehreren Stellgliedern kann sichergestellt werden, dass nur die eine, momentan mit einer Regeldifferenz behaftete Prozessgröße beeinflusst wird, und die anderen (prozesstechnisch gekoppelten) Prozessgrößen auf ihrem Sollwert verbleiben können bzw. möglichst wenig von diesem abweichen.

Eine Auslegung, d.h. eine Parametrierung, der Entkopplungszweige ist von einem tatsächlichen dynamischen Prozessverhalten der betrachteten Systeme abhängig und muss bei einer Inbetriebnahme der Kraftwerksregelung durchgeführt werden.

Bei der Parametrisierung werden Anlagenversuche durchgeführt. Die Auswertung der Versuchsergebnisse liefert dann eine Erkenntnis darüber, welche Parameter inwiefern zu verändern sind. Die Parameter werden dann so lange händisch verstellt, bis die Regelung eine bestmögliche Entkopplung erreicht.

Die Parametrisierung gestaltet sich (zeit-)aufwändig und ist entsprechend teuer.

In dem Zeitraum der Versuchsdurchführung kann die technische Anlage, beispielsweise das Dampfkraftwerk, nicht ökonomisch, beispielsweise nicht kostengünstig gemäß einem aktuellen Leistungsbedarf eines durch das Dampfkraftwerk mit elektrischer Leistung zu versorgenden Stromnetzes, betrieben werden.

Die Dynamik des Prozesses ist in der Regel vom aktuellen Betriebszustand der Anlage abhängig, so dass die Parametrisierung in bzw. für mehrere Arbeitspunkte durchgeführt werden muss.

Darüber hinaus wird sich das dynamische Verhalten der technischen Anlage, wie des Kraftwerksprozesses durch Einsatz unterschiedlicher Brennstoffsorten, durch Verschleiß, durch Verschmutzung u.Ä. im Laufe der Zeit verändern.

Die Entkopplungszweige, die einmal auf ein bestimmtes Anlagenverhalten eingestellt wurden, werden mit der Zeit dann nicht mehr optimal sein. Das Regelverhalten wird sich daher im Laufe der Zeit verschlechtern, die Anlagenstabilität nimmt ab.

Ausgehend davon besteht damit die Notwendigkeit für eine einfach zu erstellende Anlagenregelung für gekoppelte Mehrgrö-ßensysteme.

Im Stand der Technik ist eine sogenannte Mehrgrößenregelung für ein gekoppeltes Mehrgrößensystem bekannt.

Bei der Mehrgrößenregelung wird ein Gesamtsystem, wie eine technische Anlage oder nur ein Teilsystem der technischen Anlage, mit mehreren Regelgrößen und mehreren Stellgliedern betrachtet. Hierbei kann jedes Stellglied - theoretisch - auf jede Regelgröße wirken, wodurch eine - theoretische - multidimensionale prozesstechnische Kopplung von Prozessen in dem Teilsystem berücksichtigt wird.

Damit lässt sich bei einer/durch eine solche Mehrgrößenregelung ein verkoppeltes Mehrgrößensystem nachbilden.

Wird ein Mehrgrößenregler für ein verkoppeltes Mehrgrößensystem ausgelegt, werden damit automatisch auch Entkopplungsstrukturen erzeugt.

Aus EP 1 488 863 A2 ist beispielsweise eine Regelung der Dickenqualität in Walzprozessen bekannt. Es wird hierzu ein online Prozessmodell vorgeschlagen, welche online eine Adaption von Modellparametern durch Identifikation variabler Prozessparameter durchführt. Eine Anpassungseinheit führt mittels der adaptierten Modellparameter eine Anpassung von Regelparametern durch und prägt die adaptierten Regelparameter zur Anpassung und Umsetzung von Regelfunktionen und/oder Regelkreisen einer modellbasierten Mehrgrößenregelungseinheit online auf.

Mittel der modellbasierten Mehrgrößenregelungseinheit umfassen eine Entkopplungseinheit, welche modellbasiert und online adaptiert eine dynamische Entkopplung vorbestimmter Prozessgrößen bewirkt. Es wird ein Regelverhalten der Dickenregelung erreicht, das weitgehend unabhängig von Bandzugeinflüssen mit zeitvariablen Parametern und/oder mit sich ändernden prozessbedingten Resonanzfrequenzen und/oder von sich ändernden Dämpfungseffekten ist.

Allerdings weist ein solcher Mehrgrößenregler bzw. eine solche Mehrgrößenregelung einen oder mehrere der folgenden Nachteile auf, welche ihn bzw. sie für die Regelung von technischen Anlagen, wie Kraftwerke, ungeeignet machen.

Dem Mehrgrößenregler liegt ein mathematischer Algorithmus zugrunde, der nicht in einem Funktionsplan eines Kraftwerksleitsystems dargestellt werden kann. Er ist daher nicht transparent und für einen Anlagenbetreiber damit nicht wartbar, das heißt nicht veränderbar und nicht erweiterbar.

Die fehlende Transparenz des Mehrgrößenreglers führt außerdem dazu, dass ein Inbetriebsetzer nicht die Möglichkeit hat, Zusatzstrukturen aufzubauen, mit denen besondere Betriebsbedingungen berücksichtigt werden können.

Derartige nichtlineare Randbedingungen, wie beispielsweise Grenzkurven einer Pumpe, treten jedoch in jeder technischen Anlage auf.

Der Mehrgrößenregler kann einmal für eine bestimmte Prozessstruktur und Prozessdynamik bei der technischen Anlage ausgelegt werden. Er ist jedoch nicht in der Lage, sich an ständig wechselnde Randbedingungen automatisch anzupassen.

Der Mehrgrößenregler hat selbst Parameter, die nur schwer, gegebenenfalls nur unter Verwendung eines speziellen Tools, bestimmbar sind. Eine angestrebte und erwünschte Reduktion des Inbetriebsetzungsaufwandes kann daher nicht erreicht werden.

Die Implementierung eines Mehrgrößenreglers ist darüber hinaus auch mit einem hohen Rechenaufwand und Speicherplatzbedarf verbunden, und er kann daher nicht in einem Automatisierungssystem, insbesondere in einem Kraftwerksleitsystem, eingesetzt werden.

Da diese Nachteile von Mehrgrößenreglern deren Verwendung bei der Automatisierung von technischen Anlagen bzw. in Kraftwerksleitsystemen ungeeignet machen, ist der Einsatz von einschleifigen Regelkreisen mit Entkopplungszweigen und die Durchführung von Anlagenversuchen zur Parametrierung der Entkopplungsglieder die gängige Praxis.

Bei der händischen Parametrierung ist man derzeit auf den Einsatz von Entkopplungsgliedern niederer Ordnung beschränkt, da ansonsten zu viele Parameter bei den Anlagenversuchen einzustellen wären, was in der Praxis letztendlich nicht beherrschbar wäre.

Unter Umständen muss hierdurch aber eine geringere Regelgüte in Kauf genommen werden, da ein eventuell regelungstechnisch besser passendes Entkopplungsglied höherer Ordnung von Hand nicht einstellbar wäre.

Ferner ist es bekannt, Automatisierungssysteme, insbesondere anlagentechnische Steuerungen und/oder Regelungen, - meist in Form von Software - in eine Leittechnik einer Anlage zu implementieren.

Unter einer Leittechnik, insbesondere einer Prozessleittechnik, einer Anlage bezeichnet man daher üblicherweise Mittel und Verfahren, die einem Steuern, Regeln und Sichern einer solchen prozess- bzw. verfahrenstechnischen Anlage dienen.

Der Erfindung liegt die Aufgabe zugrunde, ein Verfahren für eine Erstellung einer Regelung einer technischen Anlage sowie ein Automatisierungssystem mit einer Regelung für eine technische Anlage zu schaffen, welche die beschriebenen Nachteile im Stand der Technik überwinden.

Insbesondere soll die Erfindung einerseits den Aufwand für die Inbetriebnahme von Kraftwerksregelkreisen reduzieren und andererseits eine Langzeitstabilität der technischen Anlage erhöhen.

Ferner liegt der Erfindung die Aufgabe zu Grunde, ein Verfahren für eine Erstellung einer Regelung einer technischen Anlage sowie ein Automatisierungssystem mit einer Regelung für eine technische Anlage zu schaffen, welche es ermöglichen, Parameter von Entkopplungszweigen in einem Online-Betrieb an das dynamische Verhalten von anlagentechnischen Prozessen automatisch anzupassen.

Diese Aufgaben werden durch ein Verfahren zur automatischen Adaptierung einer Regelung einer technischen Anlage, insbesondere eines Kraftwerks, sowie durch ein Automatisierungssystem mit einer Regelung für eine technische Anlage gemäß dem jeweiligen unabhängigen Patentanspruch gelöst.

Das erfindungsgemäße Automatisierungssystem ist insbesondere geeignet zur Durchführung des erfindungsgemäßen Verfahrens oder einer dessen nachfolgend erläuterten Weiterbildungen, wie auch das erfindungsgemäße Verfahren insbesondere geeignet ist, auf dem erfindungsgemäßen Automatisierungssystem oder einer dessen nachfolgend erläuterten Weiterbildungen ausgeführt zu werden.

Bevorzugte Weiterbildungen der Erfindung ergeben sich auch aus den abhängigen Ansprüchen. Die Weiterbildungen beziehen sich sowohl auf das erfindungsgemäße Verfahren als auch auf das erfindungsgemäße Automatisierungssystem.

Die Erfindung und die beschriebenen Weiterbildungen können sowohl in Software als auch in Hardware, beispielsweise unter Verwendung einer speziellen elektrischen Schaltung, realisiert werden.

Ferner ist eine Realisierung der Erfindung oder einer beschriebenen Weiterbildung möglich durch ein computerlesbares Speichermedium, auf welchem ein Computerprogramm gespeichert ist, welches die Erfindung oder die Weiterbildung ausführt.

Auch können die Erfindung und/oder jede beschriebene Weiterbildung durch ein Computerprogrammerzeugnis realisiert sein, welches ein Speichermedium aufweist, auf welchem ein Computerprogramm gespeichert ist, welches die Erfindung und/oder die Weiterbildung ausführt.

Das erfindungsgemäße Verfahren zur automatischen Adaptierung einer Regelung einer technischen Anlage geht von Regelkreisen für die Regelung der technischen Anlage aus. Solche Regelkreise für die Regelung der technischen Anlage werden zunächst aufgestellt - oder liegen alternativ als bereits aufgestellte Regelkreise vor.

Beides soll im Rahmen der Erfindung als Regelkreiserstellung verstanden werden.

Bei der Aufstellung der Regelkreise werden übliche Parameter von Regelkreisen, wie Übertragungsglieder, Zeitkonstanten und/oder Verstärkungsfaktoren für die Übertragungsglieder, festgelegt bzw. bestimmt.

Ausgehend von den aufgestellten Regelkreisen werden aus diesen zunächst mindestens ein erster Regelkreis und ein mit dem ersten Regelkreis gekoppelten zweiter Regelkreis identifiziert und ausgewählt, deren Kopplung über eine von dem ersten und dem zweiten Regelkreis gemeinsam beeinflusste Prozessgröße gegeben ist.

Anschließend wird - diese Kopplung berücksichtigend - ein den ersten und den zweiten Regelkreis entkoppelndes Entkopplungsglied bestimmt, welches mindestens einen adaptierbaren Parameter, beispielsweise eine Zeitkonstante, einen Verstärkungsfaktor oder auch andere Faktoren oder Konstanten, aufweist.

Weiter wird bei der Erfindung nun der mindestens eine adaptierbare Parameter des Entkopplungsgliedes automatisch in einem Online-Betrieb der technischen Anlage an ein tatsächliches dynamisches Prozessverhalten der technischen Anlage angepasst (automatische Online-Adaption).

Dabei soll unter einem Online-Betrieb der technischen Anlage verstanden werden, dass die technische Anlage tatsächlich betrieben wird, beispielsweise in einem Normalbetrieb der technischen Anlage aber auch schon bei einer Inbetriebnahme der technischen Anlage, und dadurch das tatsächliche dynamische Prozessverhalten der technischen Anlage generiert.

Die automatische Online-Adaption erfolgt nun dadurch, dass das tatsächliche dynamische Prozessverhalten der technischen Anlage messtechnisch ermittelt wird. Weiter wird ein theoretisches (optimales) Prozessverhalten der technischen Anlage unter Verwendung eines Modells der technischen Anlage durch Simulation ermittelt.

Der mindestens eine adaptierbare Parameter des Entkopplungsgliedes wird dann solange verändert (adaptiert), bis das tatsächliche dynamische Prozessverhalten der technischen Anlage dem theoretischen (optimalen) Prozessverhalten der technischen Anlage in einem vorgebbaren Umfang bzw. Güte entspricht.

Damit steht dann bei der Erfindung mit dem ersten Regelkreis und mit dem - unter Verwendung des den automatisch Onlineadaptierten Parameter aufweisenden Entkopplungsgliedes gekoppelten - zweiten Regelkreis die automatisch adaptierte Regelung für die technische Anlage zur Verfügung.

Die Bestimmung dieses Entkopplungsgliedes kann bevorzugt zunächst ausgehend von einem theoretischen Entkopplungsglied erfolgen.

Die Bestimmung dieses theoretischen Entkopplungsglieds kann auf Basis einer - durch die technische Anlage - vorgegebenen (tatsächlichen) Anlagendynamik erfolgen. Kurz, es kann das theoretische Entkopplungsglied unter Verwendung der vorgegebenen Anlagendynamik bestimmt werden.

Ein die beiden Regelkreise entkoppelndes Entkopplungsglied enthält ein Vorhalte- oder ein Verzögerungsglied.

Ein Verzögerungsglied E(s) bestimmt sich, beispielsweise bei einer PT1-Strecke (erster Ordnung) mit kleinerer Zeitkonstante TPT1 und einer PT3-Strecke (dritter Ordnung) mit größerer Zeitkonstante TPT3 (TPT1 < TPT3), durch die Beziehung

$$E(s) = \frac{1}{\left(1 + \dfrac{T_{PT2}}{2} \cdot s\right)^2},$$

wobei TPT2 = TPT3 - TPT1.

Ein Vorhaltegliedglied E(S) bestimmt sich, beispielsweise bei einer PT2-Strecke (zweiter Ordnung) mit kleinerer Zeitkonstante TPT2 und einer PT3-Strecke (dritter Ordnung) mit größerer Zeitkonstante TPT3 (TPT2 < TPT3), beispielsweise durch die Beziehung

$$E(s) = \frac{\left(1 + \dfrac{T_{PT3}}{3} \cdot s\right)^3}{\left(1 + \dfrac{T_{PT2}}{2} s\right)^2 \cdot (1 + s)}$$

Es können somit mit den beiden Arten von Entkopplungsgliedern E(S), d.h. Verzögerungs- und Vorhalteglied, zwei unterschiedliche Fälle/Arten von gegenseitiger Beeinflussung bei den dynamischen Prozessen und damit bei den beiden Regelkreisen unterschieden werden, nämlich zum einen Fälle von Regelkreisen, die durch Glieder mit Verzögerungsverhalten entkoppelt werden, und zum anderen Fälle, in denen Entkopplungsglieder nötig sind, die Vorhaltecharakteristika aufweisen.

Anschaulich und vereinfacht ausgedrückt, beeinflusst - entsprechend der gegebenen Anlagendynamik - der erste Regelkreis die gemeinsame Prozessgröße kurzfristiger/längerfristiger wirkend als diese in dem zweiten Regelkreis beeinflusst wird, so kann für die Entkopplung der beiden Regelkreise entsprechend dieser Anlagendynamik ein Vorhalte- bzw. Verzögerungsglied gewählt werden.

Eine Anwendbarkeit einer solchen Entkopplung kann verbessert werden, wenn auch ein Rauschverhalten berücksichtigt wird. Kurz, die Entkopplung sollte voraussetzen, dass auch ein Rauschverhalten annehmbar ist. Anschaulich ausgedrückt, das Entkopplungsglied sollte ein Rauschen nicht (noch) verstärken.

Insbesondere ein theoretisches Entkopplungsglied mit einer Vorhaltecharakteristik (Vorhalteglied) neigt zu eben dieser Rauschverstärkung.

Hierzu kann die Erfindung weiter vorsehen, dass das theoretische Entkopplungsglied mit einem Rauschkompensationsglied $E_R(s)$ erweitert wird (rauschkompensiertes theoretisches Entkopplungsglied), welches durch ein entsprechendes Kompensationsverhalten, d.h. durch eine entsprechend der Verstärkung des theoretischen Entkopplungsglieds entgegenwirkende (Verstärkungs-)Verminderung, die Rauschverstärkung aus dem theoretischen Entkopplungsglied zumindest kompensiert.

Insbesondere kann ein solches Rauschkompensationsglied $E_R(s)$ wie folgt bestimmt werden

$$E_R(s) = \frac{1 + T_D \cdot s}{1 + T_X \cdot s}$$

Daraus folgend kann das um das Rauschkompensationsglied $E_R(s)$ erweiterte theoretische Entkopplungsglied E(s), d.h. das rauschkompensierte theoretische Entkopplungsglied (wieder E(s)), wie folgt bestimmt werden

$$E(s) = \frac{\left(1 + \dfrac{T_{PT3}}{3} \cdot s\right)^3}{\left(1 + \dfrac{T_{PT2}}{2} s\right)^2 \cdot (1 + s)} \cdot \frac{1 + T_D \cdot s}{1 + T_X \cdot s}$$

Weiterhin kann die Erfindung vorsehen, dass das theoretische Entkopplungsglied, insbesondere dieses rauschkompensierte theoretische Entkopplungsglied E(S), um ein Statikglied F(s) erweitert wird, welches einen statischen Anteil bei der Entkopplung berücksichtigt bzw. eliminiert (statikkompensiertes theoretisches Entkopplungsglied bzw. rausch- und statikkompensiertes theoretisches Entkopplungsglied).

Da das theoretische Entkopplungsglied bzw. das rauschkompensierte theoretische Entkopplungsglied nämlich selbst einen stationären Wert annehmen wird, d.h. ein Ausgangssignal des theoretischen Entkopplungsglieds bzw. des rauschkompensierten theoretischen Entkopplungsglieds verbleibt auf einem stationären Wert, wodurch ein zu entkoppelnder zweiter Regelkreis ausschließlich als Störgrößenregler arbeiten würde, kann vorgesehen werden, dass das - vormals stationäre - Ausgangssignal des theoretischen Entkopplungsglieds bzw. des rauschkompensierten theoretischen Entkopplungsglieds mittels dieses - das theoretische bzw. rauschkompensierte theoretische Entkopplungsglied erweiternde - Statikgliedes wieder zurückgefahren werden kann.

Insbesondere kann vorgesehen sein, dass dieses Statikglied derart angepasst ist, dass eine Dynamik des Zurückfahrens des Ausgangssignals des Entkopplungsglieds einer Dynamik des durch das Entkopplungsglied von dem ersten Regelkreis entkoppelten zweiten Regelkreises entspricht.

Anschaulich gesehen bzw. vereinfacht ausgedrückt, in dem Maße wie sich eine Änderung des ersten Regelkreises auf den zweiten Regelkreis auswirkt und der zweite Regelkreis entsprechend reagiert, wird das Ausgangssignal des Entkopplungsglieds zurückgefahren.

Regelungstechnisch kann dies dadurch bewirkt werden, dass die Übertragungscharakteristik des ersten Regelkreises mit negativem Vorzeichen am Ausgang des theoretischen Entkopplungsgliedes bzw. des rauschkompensierten theoretischen Entkopplungsgliedes eingekoppelt wird.

Dieses kann im Falle des rauschkompensierten theoretischen Entkopplungsgliedes wie folgt beschrieben wer-den:

$$\mathrm{E(s)} - \mathrm{F(S)} =$$

$$\frac{\left(1 + \dfrac{T_{PT3}}{3} \cdot s\right)^3}{\left(1 + \dfrac{T_{PT2}}{2} s\right)^2 \cdot (1 + s)} \cdot \frac{1 + T_D \cdot s}{1 + T_X \cdot s} - \frac{1}{\left(1 + \dfrac{T_{PT2}}{2} \cdot s\right)^2}$$

Weiterhin kann die Erfindung - als den mindestens einen automatisch in dem Online-Betrieb der technischen Anlage adaptierbaren Parameter - einen automatisch adaptierbaren Entkopplungsfaktor V bei dem Entkopplungsglied vorsehen, durch welchen eine Stärke der Entkopplung durch das Entkopplungsglied beeinflusst wird.

Besonders bevorzugt kann ein solcher Entkopplungsfaktor V bei dem rausch- und statikkompensierten theoretischen Entkopplungsglied vorgesehen werden, durch welchen dann eine Stärke der Entkopplung durch das rausch-und statikkompensierte theoretische Entkopplungsglied beeinflusst wird (adaptierbares rausch- und statikkompensiertes theoretisches Entkopplungsglied).

Durch eine - im Rahmen der automatischen Adaptierung durchführbare - Veränderung dieses Entkopplungsfaktors V (automatische Online-Adaption) kann somit unmittelbar Einfluss auf die Stärke der Entkopplung genommen werden - und damit Abweichungen vom theoretischen, optimalen Übertragungsverhalten mit dem aktuell vorliegenden Entkopplungsglied (aktueller Entkopplungsfaktor V) zum realen Übertragungsverhalten kompensiert werden.

Denn stimmen angenommene Zeitkonstanten des Entkopplungsglieds nicht mit einer realen Übertragungsstrecke überein und/oder besitzt die Strecke in der Realität abweichende Übergangscharakteristika, so ergibt sich folglich auch eine Abweichung der tatsächlichen Übergangsfunktion von der zu erwartenden Übergangsfunktion.

Vereinfacht ausgedrückt, durch die Verwendung dieses Entkopplungsfaktors V - und gezielte Veränderung des Entkopplungsfaktors V - kann eine Abweichung zwischen angenommenem (optimalem) Übertragungsverhalten und realem Übertragungsverhalten kompensiert werden.

Eine Strecke mit dem adaptierbaren rausch- und statikkompensierten theoretischen Entkopplungsglied kann so wie folgt beschrieben werden

$$UE \; = \; V(E(s) \; - \; F(S)) =$$

$$V \; ( \; \frac{\left(1 + \dfrac{T_{PT3}}{3} \cdot s\right)^3}{\left(1 + \dfrac{T_{PT2}}{2} s\right)^2 \cdot (1 + s)} \cdot \frac{1 + T_D \cdot s}{1 + T_X \cdot s} \; - \; \frac{1}{\left(1 + \dfrac{T_{PT2}}{2} \cdot s\right)^2} \; )$$

Weiterhin kann dann bei der Erfindung nun die automatische Adaption des adaptierbaren rausch- und statikkompensierten theoretischen Entkopplungsglieds erfolgen, wobei - bei der Adaption - das theoretische (optimale) Prozessverhalten mit dem tatsächlichen dynamischen Prozessverhalten des geregelten Prozesses verglichen wird.

Es wird also die Stärke der Entkopplung, d.h. der Entkopplungsfaktor V, solange verändert (adaptiert), bis das tatsächliche Prozessverhalten der technischen Anlage - messbar an der Anlage, beispielweise mittels einer entsprechenden Sensorik, - dem optimalen Prozessverhalten der technischen Anlage - bestimmbar durch Simulation - zumindest in einem vorgebbaren Maße bzw. Güte entspricht.

Als Abbruchkriterium der Adaption wird dabei die vorgebbare Güte der Übereinstimmung von tatsächlichem und optimalem Prozessverhalten der technischen Anlage verwendet.

Unterschreitet beispielsweise die Abweichung des tatsächlichen Prozessverhaltens von dem optimalen Prozessverhalten für einen Wert des zu adaptierenden Entkopplungsfaktors V einen vorgebbaren Grenzwert, so wird die Adaption abgebrochen. Der zuletzt verwendete Wert des Entkopplungsfaktors V wird für die adaptierte Regelung verwendet.

Ein solcher Grenzwert kann beispielsweise in Form eines Totbandes um den theoretischen (optimalen) Prozessverlauf ausgedrückt werden. Liegt dann das tatsächliche dynamische Prozessverhalten bzw. der tatsächliche Prozessverlauf - für einen bestimmten Wert des Entkopplungsfaktors V - innerhalb dieses Totbandes, so hat die Entkopplung bzw. Regelung die vorgegeben Güte erreicht - und die Adaption wird abgebrochen.

Ein solches Totband ist insbesondere geeignet, um wesentliche systematische Abweichungen von Messrauschen und sonstigen zufälligen Schwankungen unterscheiden zu können.

Numerische (Optimierungs-)Strategien für die Adaptierung bzw. Veränderung des Entkopplungsfaktors V mit entsprechenden Abbruchkriterien sind bekannt.

Auch kann bei der Adaptierung zusätzlich noch Vorwissen darüber, wie sich bei einer Veränderung des Entkopplungsfaktors V die Abweichung verändert, eingebracht bzw. berücksichtigt werden.

Mit den - mittels des adaptierten Entkopplungsgliedes, insbesondere in Form des adaptierten rausch- und statikkompensierten theoretischen Entkopplungsglieds, - entkoppelten Regelkreisen steht eine automatisch adaptierte Regelung für die technische Anlage zur Verfügung.

Bei dem erfindungsgemäßen Automatisierungssystem zur Regelung einer technischen Anlage ist das erfindungsgemäße Verfahren in diesem implementiert und steht dort zu der erfindungsgemäßen automatischen Adaptierung der Regelung der technischen Anlage zur Verfügung. So auch kann das erfindungsgemäße Automatisierungssystem zur Regelung einer technischen Anlage die automatisch adaptierte Regelung aufweisen.

Diese automatische erfindungsgemäße Adaptierung kann somit einerseits bei Inbetriebnahme der technischen Anlage, beispielsweise eines Dampfkraftwerks, wie aber insbesondere auch Online, d.h. während des Betriebs der technischen Anlage, durchgeführt werden. Hierdurch kann eine kontinuierliche Anpassung der Regelstrukturen an das tatsächliche dynamische Anlagenverhalten erreicht werden. D.h., die Erfindung ermöglicht eine ggf. notwendige Anpassung der Entkopplungsglieder im Zyklus des Automatisierungssystems vorzunehmen.

Die Erfindung erweist sich auch über die bereits genannten Vorteile hinaus erheblich vorteilhaft.

So können bei der Erfindung Entkopplungsglieder höherer Ordnung realisiert werden, wohingegen bei der händischen Parametrierung nur Entkopplungsglieder erster Ordnung eingesetzt werden. Erst die Erfindung mit ihrer automatischen Anpassung ermöglicht die Handhabung einer Vielzahl von Parametern, die händisch mit Anlagenversuchen nicht mehr eingestellt werden können.

Die Erfindung erreicht damit nicht nur, dass Entkopplungsglieder nicht mehr händisch in Betrieb genommen werden müssen. Es wird auch - durch die Möglichkeit von Entkopplungsgliedern mit höherer Ordnung - eine Regelgüte erzielt, die mit der bisherigen Vorgehensweise unerreichbar ist.

Die durch die Erfindung mögliche automatische Anpassung der Regelstrukturen sowohl bei Inbetriebnahme der technischen Anlage als auch im Betrieb der technischen Anlage, d.h. im Online-Betrieb der technischen Anlage, erweist sich als schnell durchführbar und damit auch äußerst kosteneffizient.

Die Erfindung adaptiert selbständig die Entkopplungsglieder an das tatsächliche dynamische Verhalten des geregelten Prozesses und ist daher sehr robust gegenüber der Vorgabe der Anlagendynamik.

Die Erfindung kann darüber hinaus mit einem Schätzalgorithmus verbunden werden, der im Online-Betrieb die Dynamik eines Prozesses ermittelt.

Die Erfindung selbst hat darüber hinaus nur Parameter, die Offline bestimmt werden bzw. werden können. Außerdem erweist sich die Erfindung als äußerst fehlertolerant gegenüber falsch eingestellten Parametern, wie Zeitkonstanten und Übertragungsgliedern bei den Regelkreisen.

Auch erweist sich die Erfindung als vorteilhaft hinsichtlich des Rechenaufwandes und Speicherplatzbedarfs - und ist damit für einen Einsatz in einem Automatisierungssystem und insbesondere in einem Kraftwerksleitsystem äußerst geeignet.

Damit kann durch die Erfindung erstmalig eine Reduktion der Inbetriebnahmedauer von Regelungsstrukturen, eine Reduktion der Inbetriebnahmekosten von Regelungsstrukturen sowie eine Erhöhung der Qualität der Regelung umgesetzt werden.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale wird der Fachmann jedoch zweckmäßigerweise auch einzeln betrachten und zu sinnvollen weiteren Kombinationen zusammenfassen.

Insbesondere sind diese Merkmale jeweils einzeln und in beliebiger geeigneter Kombination mit dem erfindungsgemäßen Verfahren und/oder mit der Vorrichtung gemäß dem jeweiligen unabhängigen Anspruch kombinierbar.

In Figuren ist ein Ausführungsbeispiel der Erfindung dargestellt, welches im Weiteren näher erläutert wird.

Es zeigen

FIG 1     eine regeltechnische Darstellung von Prozessen bei einem Dampfkraftwerk,

FIG 2     ein vereinfachtes regeltechnisches Modell von Prozessstrecken zweier gekoppelter Regelkreise (Brennstoffregelung, Frischdampfregelung) mit eingebautem Entkopplungsglied gemäß einem Ausführungsbeispiel der Erfindung,

FIG 3     ein Blockschaltbild einer angepassten Entkopplung zwischen einer ersten Prozessgröße (Brennstoffwärmestrom) und einer zweiten Prozessgröße (Frischdampftemperatur) gemäß dem Ausführungsbeispiel der Erfindung,

FIG 4     Übersicht über Verläufe von möglichen Übergangsfunktionen bei falscher Annahme von Entkopplungsparametern oder Streckencharakteristika bei fest angenommenem Entkopplungsfaktor V gemäß dem Ausführungsbeispiel der Erfindung,

FIG 5     Verläufe von verschiedenen Übergangsfunktionen (ohne Entkopplung, mit empirisch ermittelter Entkopplung, mit erfindungsgemäßen Entkopplung) der zweiten Prozessgröße (Frischdampftemperatur) bei sprunghafter Änderung der ersten Prozessgröße (Brennstoffwärmestrom) gemäß dem Ausführungsbeispiel der Erfindung.

Ausführungsbeispiel: Online-Parameteradaption von Vorhalte- und Verzögerungsgliedern in Kraftwerksregelkreisen

**Prozessschema - Dampferzeugung/Gewinnung von elektrischer Energie bei einem Dampfkraftwerk**

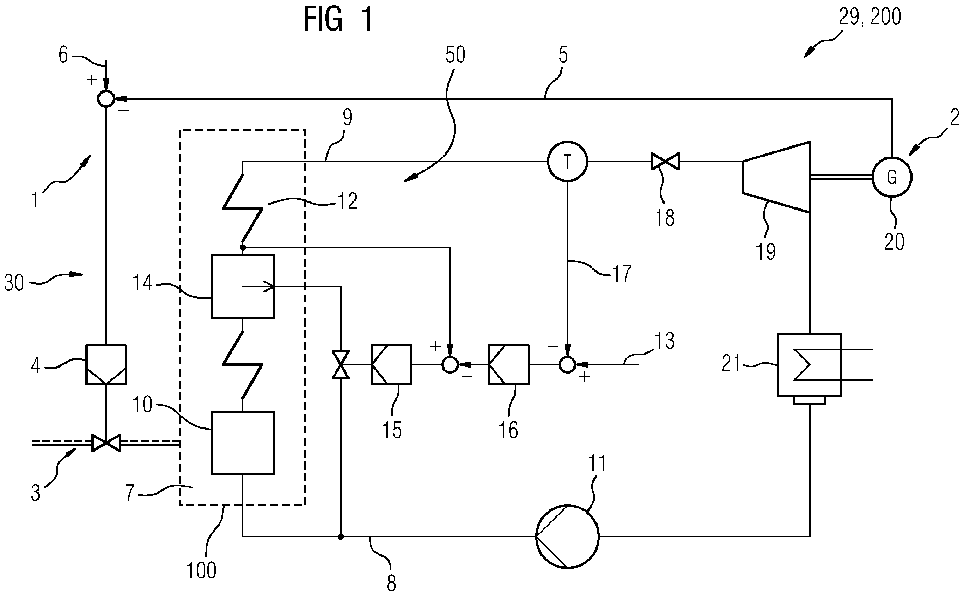

FIG 1 zeigt in einer vereinfachten Darstellung verschiedene Prozesse 1 von einer Dampferzeugung bis zu einer Gewinnung von elektrischer Energie bei einem Dampfkraftwerk (Modell 29 bzw. Regelkreiserstellung 200).

Eine gewünschte elektrische Leistung 2 des Dampfkraftwerks hängt dabei, wie FIG 1 verdeutlicht, unmittelbar mit der Einsatzmenge des genutzten Brennstoffs 3 zusammen.

Ein Regler 4 regelt abhängig vom vorgegebenen Sollwert 6 und der momentan erzeugten elektrischen Leistung 5 eine Zufuhr des Brennstoffs 3 in einen Feuerraum 7.

Der mit Rechteck 100 in FIG 1 umrahmte Bereich umfasst diejenigen Stellen bei den Prozessen 1, bei denen die Verbrennungswärme auf das eingesetzte Speisewasser 8 bzw. auf den Wasserdampf 9 wirkt.

Im Dampferzeuger 10 wird, wie FIG 1 verdeutlicht, die aus dem Verbrennungsprozess des Brennstoffs freigesetzte Wärme zur Erzeugung von Wasserdampf 9 genutzt. Das (Speise-)Wasser 8 wird dazu durch eine Speisewasserpumpe 11 dem Dampferzeuger 10 zugeführt. Die Temperatur des erzeugten Dampfs wird dann durch einen Überhitzer 12 weiter erhöht.

Um hohe Temperaturen genau regeln und damit stabil halten zu können, folgt vor dem Überhitzer 12, der den Dampf 9 auf Solltemperatur 13 bringt, eine Einspritzvorrichtung 14, die bei Bedarf Speisewasser 8 einleiten und dadurch kühlend in den Überhitzungsprozess eingreifen kann.

Die Einspritzungsregelung 15 erhält ihren Sollwert durch einen übergeordneten Regler 16, abhängig von der aktuellen Frischdampftemperatur 17 und dem vorgegebenen Frischdampf-Sollwert 13.

Der erzeugte Frischdampf 9 wird, wie FIG 1 zeigt, über ein Turbinenregelventil 18, der Turbine 19 der Anlage zugeführt, die schließlich über einen an ihr gekoppelten Generator 20 die elektrische Leistung 2 zur Verfügung stellt.

Hat der (Frisch-)Dampf 9 seine mechanische Arbeit an der Turbine 20 verrichtet, wird er über eine Kondensatoreinrichtung 21 abgekühlt und in flüssiger Form über die Speisewasserpumpe 11 wieder dem Prozess bzw. den Prozessen 1 zugeführt.

**Gekoppelte Regelkreise/Entkopplungsfälle mit "Verzögerungs-" und "Vorhaltecharakteristik"**

Innerhalb dieser in FIG 1 dargestellten Wirkungskreisläufe lassen sich zwei unterschiedliche Wechselwirkungen zwischen Regelkreisen identifizieren, welchen (zwei) unterschiedliche Entkopplungsfälle ("Verzögerungscharakteristik", "Vorhaltecharakteristik") zu Grunde liegen.

**Entkopplungsfall "Verzögerungscharakteristik"**

Soll - nach FIG 1 - die elektrische Leistung erhöht werden, so sorgt der entsprechende Regler 4, dass mehr Brennstoff 3 zugeführt wird. Jedoch bedeutet die erhöhte Brennstoffzufuhr eine größere Dampfentwicklung, wobei infolgedessen der Speisewasserstrom 8 ebenfalls erhöht werden muss.

Der Speisewassermassenstrom wird durch einen Regler abhängig von der Verdampferaustrittsenthalpie des erzeugten Wasserdampfs geregelt (nicht dargestellt).

Da ein unmittelbarer Zusammenhang zwischen Brennstoffstrom 3 und Speisewasserstrom 8 besteht, muss hier nicht auf eine Änderung der Verdampferaustrittsenthalpie gewartet werden.

Die Erhöhung des Speisewassers 8 wirkt dabei unmittelbarer auf die Verdampferaustrittsenthalpie als die Erhöhung des Brennstoffmassenstroms 3.

Dies kommt daher, dass für die Erhöhung des Speisewasserwärmestroms 8 letztendlich ausschließlich eine Erhöhung der Fördermenge der Speisewasserpumpe 11 erforderlich ist. Von der Erhöhung der Fördermenge des Brennstoffs 3 bis zur letztendlichen Wärmefreisetzung im Verbrennungsprozess und die Übertragung auf die Verdampferrohre vergeht dagegen eine längere Zeit.

Demzufolge muss eine Erhöhung des Speisewasserstroms 8 mit einer gewissen Verzögerung stattfinden, da die Hitzeübertragung auf das Speisewasser 8 auch erst verzögert zum Signal zur Erhöhung des Brennstoffmassenstroms 3 erfolgt.

In diesem Fall ist somit eine Entkopplung des Brennstoffregelkreises 30 und des Speisewasserregelkreises (gekoppelte Regelkreise) mit einer Verzögerungscharakteristik notwendig.

**Entkopplungsfall "Vorhaltecharakteristik"**

Die zweite, identifizierbare Wechselwirkung zwischen zwei Regelkreisen in FIG 1 betrifft den Brennstoffregelkreis 30 und den Regelkreis 50 für die Frischdampftemperaturregelung über die Einspritzung (Frischdampfregelkreis 50) (gekoppelte Regelkreise).

Die Speisewassereinspritzung 14 vor dem Eingang des Überhitzers 12 reagiert auf eine größere Erwärmung des Dampfs 9 über Überhitzerflächen (nicht gezeigt) erst dann, wenn über den überlagerten Regelkreis (vgl. übergeordneten Regler 16) eine Erhöhung der Frischdampftemperatur 17 erkennbar ist.

Von der Erhöhung der Fördermenge des Brennstoffs 3 bis zur letztendlichen Wärmefreisetzung im Verbrennungsprozess und die Übertragung auf die Verdampferrohre vergeht eine längere Zeit. Die freigesetzte Wärme wirkt allerdings direkt auf den Überhitzer. Dagegen wirkt die Speisewassereinspritzung 14 nur auf den Eintritt des Überhitzers 12 und es wird eine ebenfalls lange Zeit vergehen, bis eine Änderung der Dampftemperatur am Überhitzereintritt sich auf den Überhitzeraustritt ausgewirkt hat.

In Summe wirkt der Brennstoffwärmestrom 3 schneller auf die Frischdampftemperatur 17, als die Speisewassereinspritzung 14.

Da aber unter keinen Umständen eine zu hohe Frischdampftemperatur 17 entstehen sollte, muss möglichst frühzeitig über die Einspritzdüsen (bei 14) Speisewasser 8 zur Kühlung eingeleitet werden.

Der Brennstoffregelkreis 30 und der Frischdampfregelkreis 50 sind demnach mit einer Entkopplung mit Vorhaltcharakteristik zu entkoppeln.

**Entkopplung mit Vorhaltecharakteristik**

Wenn auch im Folgenden exemplarisch die Entkopplung des Brennstoffregelkreises 30 und des Frischdampfregelkreises 50 (Entkopplung mit Vorhaltecharakteristik) näher ausgeführt wird, so wird der Fachmann das Vorgehen dabei entsprechend für die Entkopplung des Brennstoffregelkreis 30 und des Speisewasserregelkreis (Entkopplung mit Verzögerungscharakteristik) anwenden.

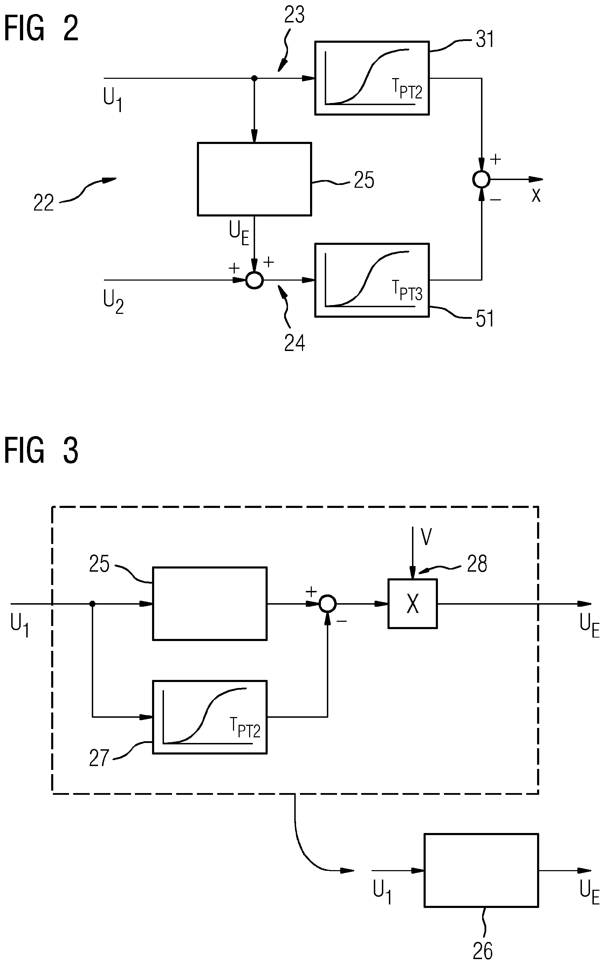

FIG 2 zeigt ein vereinfachtes regeltechnisches Modell 22 der beiden Prozessstrecken 23, 24 der beiden gekoppelten Regelkreise 30, 50, d.h. des Brennstoffregelkreises 30 und des Frischdampfregelkreises 50 (vgl. FIG 1).

Dabei wird wie FIG 2 zeigt das Übertragungsverhalten im Brennstoffregelkreis 30 durch ein PT2-Glied 31 (PTn-Glied zweiter Ordnung mit n als Ordnungszahl), das Übertragungsverhalten im Frischdampfregelkreis 50 durch ein PT3-Glied 51 (PTn-Glied dritter Ordnung) - mit entsprechenden, gewählten Zeitkonstanten TPT2, TPT3 und Verstärkungsfaktoren KPT2, KPT3 - beschrieben.

Die Entkopplung der beiden Regelkreise 30, 50, d.h. des Brennstoffregelkreises 30 und des Frischdampfregelkreises 50 (vgl. FIG 1), soll die beiden Eingangsgrößen U1 (Brennstoffmassenstrom), U2 (Speisewassereinspritzung) bei den beiden Prozessstrecken 23, 24 derart voneinander entkoppeln, dass

sich die Ausgangsgröße x (Frischdampftemperatur) möglichst wenig ändert.

Die beiden Prozessstrecken 23 und 24 sind dazu wie FIG 2 verdeutlicht über ein zwischen beiden Strecken eingebautes Entkopplungsglied 25 mit Vorhaltecharakteristik verbunden.

Dabei erhält das Entkopplungsglied 25 - als dortiges Eingangssignal - das Eingangssignal U1 des Signalpfads 23 des Brennstoffwärmestroms; das Ausgangssignal UE des Entkopplungsglieds 25 wird mit Summation auf das Eingangssignal U2 des Signalpfads 24 der Speisewassereinspritzung aufgeschaltet.

Eine Vereinfachung des Modells erfolgt dahingehend, dass eine Linearisierung um den Arbeitspunkt angenommen wurde, d.h. Zeitkonstanten des Überhitzers 14 werden als konstant betrachtet.

Weiter wird die Messverzögerung in die einzelnen Verzögerungen der beiden Eingangssignale U1 und U2 verschoben.

Auch stellt die Annahme des PT2-Gliedes 31 für den Signalpfad 23 des Brennstoffwärmestroms und die Annahme des PT3-Gliedes für den Signalpfad 24 der Speisewassereinspritzung (ausgehend vom Sollwert für die Temperatur nach der Einspritzvorrichtung 14) eine Annäherung an die tatsächlichen Verzögerungsglieder dar.

Weiter wurde der überlagerte Frischdampfregler vernachlässigt (vgl. FIG 1) und angenommen, dass das Eingangssignal U2 sich bei Änderung von U1 nicht ändert.

Das Entkopplungsglied 25 wird beschrieben durch

$$E(s) = E1(s) * E2(s)$$

mit E1(s) als theoretisches Entkopplungsglied und E2(s) als Rauschkompensation, wobei

$$E_1(s) = \frac{\left(1 + \frac{T_{PT3}}{3} \cdot s\right)^3}{\left(1 + \frac{T_{PT2}}{2} s\right)^2 \cdot \left(1 + s\right)}$$

$$E_2(s) = \frac{1 + T_D \cdot s}{1 + T_X \cdot s}$$

Dabei bildet E2(s) ein (Rausch-)Kompensationsglied, welches die Rauschverstärkung des "idealen" Entkopplungsglieds E1(s) kompensiert.

Der Parameter TD stellt den Kehrwert der Verstärkung von E1(s) dar. Der Parameter Tx wird als prozentualer Wert dieser Verstärkung gewählt. Der prozentuale Anteil der Verstärkung wird so ermittelt, dass für unterschiedliche Streckenzeitkonstanten und Verhältnisse jeweils keine Rauschverstärkung auftritt.

FIG 3 zeigt - ausgehend von der Entkopplung nach FIG 2 - eine angepasste Entkopplung 26, welche berücksichtigt, dass das Ausgangssignal UE des Entkopplungsglieds 25 keinen stationären Wert besitzen darf, sondern nach einer gewissen Zeit wieder verschwinden muss.

In welcher Zeit und welcher Charakteristik dieses Zurückgehen/Verschwinden in diesem Fall zu geschehen hat, lässt sich wie folgt abschätzen.

Ändert sich der Brennstoffwärmestrom 3, so ändert sich die Frischdampftemperatur 17 ohne ein Eingreifen des überlagerten Reglers 16 mit einer Dynamik, die durch den als Modell beschriebenen Wärmeübertragungsprozess des Überhitzers 14 vorgegeben ist.

In eben dieser Dynamik wird der überlagerte Regler 16 die Vorgabe einer geänderten Einspritzung übernehmen können, weshalb das Ausgangssignal UE des Entkopplungsglieds 25 mit dieser Dynamik zurückgehen sollte.

In der Annahme, dass die Wirkungsbeziehung des Brennstoffwärmestroms 3 auf die Frischdampftemperatur 17 durch ein PT2-Verhalten charakterisierbar ist, wird also die Rücknahme des stationären Endwerts wie FIG 3 zeigt durch ein PT2-Glied 27 mit der ermittelten Zeitkonstante für die genannte Wirkungsbeziehung bewerkstelligt.

Stimmen nun die angenommenen Zeitkonstanten TPT2, TPT3 nicht mit der realen Strecke überein oder besitzt die Strecke in der Realität abweichende Übergangscharakteristika (abweichend von den angenommenen PTn-Gliedern), so ergibt sich folglich auch eine Abweichung von der zu erwartenden Übergangsfunktion (U1/UE).

Dazu wird, wie FIG 3 verdeutlicht, ein adaptierbarer Entkopplungsfaktors V 28 auf das bisherige Modell aufgeschaltet, welcher eine Abweichung der Strecke von dem angenommenen Modell kompensiert.

FIG 3 lässt sich so wie folgt regelungstechnisch umschreiben:

$$UE = V(E(s) - F(s)) =$$

$$V \left( \frac{\left(1+\dfrac{T_{PT3}}{3}\cdot s\right)^3}{\left(1+\dfrac{T_{PT2}}{2}s\right)^2 \cdot (1+s)} \cdot \frac{1+T_D\cdot s}{1+T_X\cdot s} - \frac{1}{\left(1+\dfrac{T_{PT2}}{2}\cdot s\right)^2} \right)$$

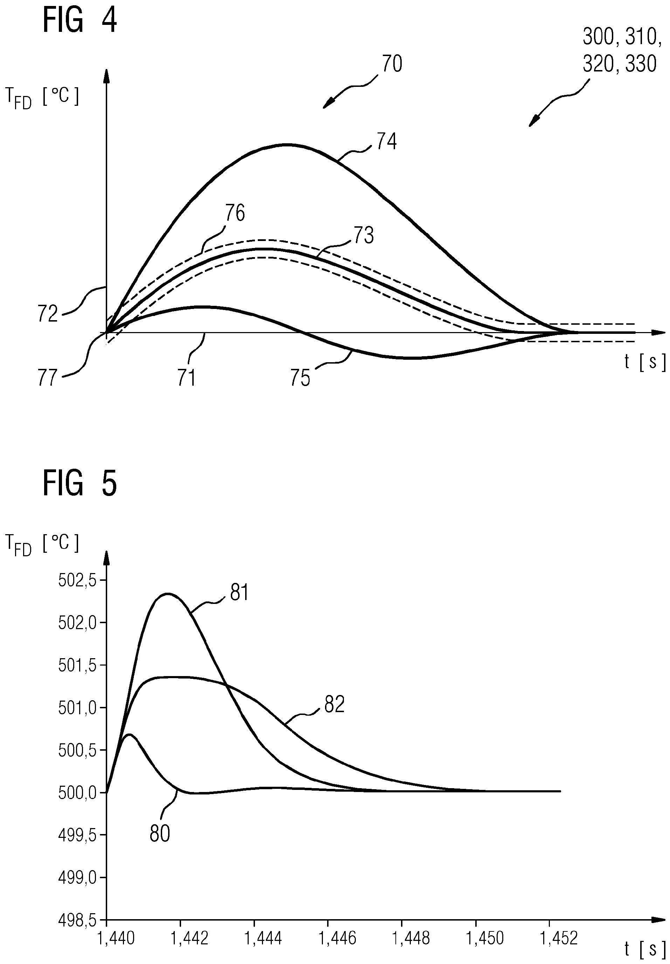

Automatische Adaption des angepassten Entkopplungsglieds (FIG 4, 300, 310, 320, 330)

Ein Anpassungsalgorithmus passt diesen Entkopplungsfaktor V nun automatisch an.

Zur Anpassung des Entkopplungsfaktors V 28 wird dazu das optimale Prozessverhalten 73 mit dem tatsächlichen Verhalten 74, 75 des geregelten Prozesses verglichen. Daraus ergibt sich dann die Notwendigkeit einer Vergrößerung bzw. Verkleinerung von V 28.

Der Entkopplungsfaktor V 28 wird dann solange - automatisch - verkleinert bzw. vergrößert (automatische Anpassung der Entkopplung), bis das tatsächliche Prozessverhalten 74, 75 dem optimalen Prozessverhalten 73 entspricht.

FIG 4 verdeutlicht, wie die Adaptierung des Entkopplungsfaktors V durchgeführt wird (300, 310, 320, 330).

FIG 4 zeigt - in Koordinatendarstellung 70 - eine Übersicht über Verläufe von möglichen Übergangsfunktionen 74, 75 bei falscher Annahme von Entkopplungsparametern oder Streckencharakteristika bei fest angenommenem Entkopplungsfaktor V. Abszisse 71 ist die Zeit (t); Ordinate 72 ist die Prozessgröße Frischdampftemperatur.

Wie FIG 4 zeigt, wird das vorhandene, angenommene Modell und die zu erwartende Übergangsfunktion als Referenzsignal/- verlauf 73 betrachtet.

Anhand von diesem Referenzverlauf 73 wird dann die Entscheidung getroffen, inwiefern - und inwieweit - der Entkopplungsfaktor V 28 verändert werden muss.

Das Referenzsignal 73 ist dabei stets auf einer Seite des aktuellen Sollwerts 77 (hier Frischdampftemperatur-Sollwert 77) des Frischdampfregelkreises 50 und besitzt damit keine Unterschwinger.

FIG 4 zeigt mit dem Referenzkurvenverlauf 73 beispielhaft für den betrachteten Prozess des Zusammenhangs von Brennstoffwärmestrom und Speisewassereinspritzung 30, 50 ein mögliches ermitteltes Referenzsignal 73, das aus dem angenommenen Modell (vgl. FIG 3) und den als gegeben angesehenen Streckenparametern ermittelt wird.

Wie weiter FIG 4 verdeutlicht, wird um das Referenzsignal 73 ein Totband 76 gelegt. Dadurch ist es möglich, um wesentliche systematische Abweichungen von Messrauschen oder sonstigen zufälligen Schwankungen unterscheiden zu können.

Bei einem (zunächst) beliebig angenommenen Entkopplungsfaktor V können nun die beiden Extremfälle auftreten, die durch die beiden Kurvenverläufe 74, 75 dargestellt sind.

Ist der Entkopplungsfaktor V zunächst zu groß gewählt (75) und damit die Entkopplungsschaltung zu stark, so entsteht ein Unterschwingen und der Kurvenverlauf 75 liegt unter dem des Referenzsignals 73.

Ist der Entkopplungsfaktor V zu klein (74), so besitzt das berechnete Entkopplungsglied eine zu geringe Entkopplungsstärke und die Amplitude des tatsächlichen Signalverlaufs 74 ist größer als diejenige des Referenzsignals 73.

Daraus werden nun die Regeln abgeleitet, wann der Entkopplungsfaktor V vergrößert und wann verkleinert werden muss.

V muss vergrößert werden wenn:

- die reale Frischdampftemperatur sich außerhalb des Totbands 76 befindet und
- der Betrag der gemessenen Frischdampftemperatur größer als die des Modells ist und
- die reale Frischdampftemperatur und die des Modells das gleiche Vorzeichen besitzen.

V muss verkleinert werden wenn:

- die reale Frischdampftemperatur sich außerhalb des Totbands 76 befindet und
- die reale Frischdampftemperatur und die des Modells unterschiedliche Vorzeichen besitzen.

Entsprechend diesen Regeln wird der Entkopplungsfaktor solange verändert, bis das tatsächliche Prozessverhalten dem optimalen Prozessverhalten entspricht, d.h. bis der tatsächliche Verlauf im Totband 76 liegt.

FIG 5 vergleicht verschiedene Verläufe 80, 81, 82 von verschiedene Übergangsfunktionen (ohne Entkopplung 81, mit empirisch ermittelter Entkopplung 82, mit erfindungsgemäßen Entkopplung 80) der Frischdampftemperatur bei sprunghafter Änderung des Brennstoffwärmestroms.

Der Verlauf 80 zeigt die Übergangsfunktion, die sich bei fertig ermitteltem Entkopplungsfaktor V durch den Anpassungsalgorithmus ergibt. Der Kurvenverlauf 80 besitzt die gewünschte Form und es tritt kein Unterschwingen auf.

Der Verlauf 81 zeigt die Übergangsfunktion ohne Entkopplung; Verlauf 82 zeigt die Übergangsfunktion bei händischer bzw. empirischer Parameteradaption. Beide Verläufe 81, 82 deuten auf eine im Vergleich zur automatisch adaptierten Regelung geringere Regelgüte hin.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Verfahren zur automatischen Adaptierung einer Regelung einer technischen Anlage,

    - bei dem für die Regelung der technischen Anlage Regelkreise erstellt werden (200), bei welchen mindestens ein erster Regelkreis (30) und ein über eine gemeinsam beeinflusste Prozessgröße mit dem ersten Regelkreis (30) verkoppelter zweiter Regelkreis (50) unter Verwendung eines ein Vorhalte- oder ein Verzögerungsglied beinhaltenden Entkopplungsgliedes (25, 26), welches zumindest einen adaptierbaren Parameter (28) aufweist, entkoppelt werden, und
    - der mindestens eine adaptierbare Parameter (28) des Entkopplungsgliedes (25, 26) automatisch in einem Online-Betrieb der technischen Anlage an ein tatsächliches dynamisches Prozessverhalten (74, 75) der technischen Anlage angepasst wird (300), sodass der erste Regelkreis die gemeinsame Prozessgröße kurzfristiger oder längerfristiger wirkend beeinflusst, als die Prozessgröße in dem zweiten Regelkreis beeinflusst wird, wobei

        - das tatsächliche dynamische Prozessverhalten (74, 75) der technischen Anlage messtechnisch ermittelt wird (310),
        - ein theoretisches optimales Prozessverhalten (73) der technischen Anlage unter Verwendung eines Modells (29, 22) der technischen Anlage durch Simulation ermittelt wird (320) und
        - der mindestens eine adaptierbare Parameter (28) des Entkopplungsgliedes (25, 26) solange verändert wird, bis das tatsächliche dynamische Prozessverhalten (74, 75) der technischen Anlage dem theoretischen optimalen Prozessverhalten (73) der technischen Anlage in einem vorgebbaren Umfang bzw. Güte entspricht (330).

2. Verfahren zur automatischen Adaptierung einer Regelung einer technischen Anlage nach mindestens einem der voranstehenden Ansprüche, bei dem das Entkopplungsglied (25, 26) unter Verwendung einer vorgegebenen Anlagendynamik bestimmt wird.

3. Verfahren zur automatischen Adaptierung einer Regelung einer technischen Anlage nach mindestens einem der voranstehenden Ansprüche, bei dem das Entkopplungsglied (25) ein Rauschkompensationsglied aufweist, welches eine Rauschverstärkung aus dem Entkopplungsglied (25) zumindest kompensiert.

4. Verfahren zur automatischen Adaptierung einer Regelung einer technischen Anlage nach mindestens einem der voranstehenden Ansprüche, bei dem das Entkopplungsglied (25) ein Statikglied (27) aufweist, welches einen statischen Anteil eines Ausgangssignals des Entkopplungsglieds (25) eliminiert.

5. Verfahren zur automatischen Adaptierung einer Regelung einer technischen Anlage nach mindestens dem voranstehenden Anspruch, bei dem das Statikglied (27) derart angepasst ist, dass ein Ausgangssignal des rauschkompensierten theoretischen Entkopplungsglied (25) in dem Maße zurückgefahren wird, wie sich eine Änderung des ersten Regelkreises (30) auf den zweiten Regelkreis (50) auswirkt und der zweite Regelkreis (50) entsprechend reagiert.

6. Verfahren zur automatischen Adaptierung einer Regelung einer technischen Anlage nach mindestens einem der voranstehenden Ansprüche, bei dem bei dem Entkopplungsglied (25) ein automatisch adaptierbarer Entkopplungsfaktor V (28) als der mindestens eine automatisch in dem Online-Betrieb der technischen Anlage adaptierbare Parameter (28) berücksichtigt wird (26) .

7. Verfahren zur automatischen Adaptierung einer Regelung einer technischen Anlage nach mindestens einem der voranstehenden Ansprüche, bei dem bei der automatischen Online-Adaption (300) ein Totband (76) bei dem theoretischen optimalen Prozessverhalten (73) der technischen Anlage berücksichtigt wird und/oder bei dem die automatische Online-Adaption (300) dann beendet wird, wenn das tatsächliche dynamische Prozessverhalten (74, 75) in einem bei dem theoretischen optimalen Prozessverhalten (73) berücksichtigtem Totband (76) liegt.

8. Verfahren zur automatischen Adaptierung einer Regelung einer technischen Anlage nach mindestens einem der voranstehenden Ansprüche, bei dem die technische Anlage ein Kraftwerk, insbesondere ein Dampfkraftwerk, ist.

9. Verfahren zur automatischen Adaptierung einer Regelung einer technischen Anlage nach mindestens einem der voranstehenden Ansprüche, eingesetzt zu einer automatischen Entkopplung des ersten (30) und des zweiten Regelkreises (50).

10. Verfahren zur automatischen Adaptierung einer Regelung einer technischen Anlage nach mindestens einem der voranstehenden Ansprüche, eingesetzt zu der Adaptierung der Regelung (300) bei einer Inbetriebnahme der technischen Anlage und/oder während eines Betriebes der technischen Anlage.

11. Automatisierungssystem mit einer Regelung für eine technische Anlage, bei welchem das Verfahren nach mindestens einem der voranstehenden Ansprüche und/oder eine durch das Verfahren nach mindestens einem der voranstehenden Ansprüche automatisch adaptierte Regelung implementiert ist.

**Claims**

1. Method for the automatic adaptation of technical plant control,

- in which control circuits are created (200) for the control of the technical plant, in which at least a first control circuit (30) and a second control circuit (50) coupled to the first control circuit (30) via a common influenced process variable are decoupled using a decoupling element (25, 26) which contains a derivative lag or delay element and has at least one adaptable parameter (28), and
- the at least one adaptable parameter (28) of the decoupling element (25, 26) is automatically adapted (300) in online operation of the technical plant to an actual dynamic process behaviour (74, 75) of the technical plant, with the result that the first control circuit influences the common process variable with a shorter-term or longer-term effect than the process variable in the second control circuit, wherein

- the actual dynamic process behaviour (74, 75) of the technical plant is measured (310),

- a theoretical optimum process behaviour (73) of the technical plant is determined (320) through simulation using a model (29, 22) of the technical plant, and
- the at least one adaptable parameter (28) of the decoupling element (25, 26) is modified until the actual dynamic process behaviour (74, 75) of the technical plant corresponds (330) to the theoretical optimum process behaviour (73) of the technical plant in a predefinable scope or quality.

2. Method for the automatic adaptation of technical plant control according to at least one of the preceding claims, in which the decoupling element (25, 26) is determined using a predefined plant dynamic response.

3. Method for the automatic adaptation of technical plant control according to at least one of the preceding claims, in which the decoupling element (25) has a noise compensation element which at least compensates for noise amplification from the decoupling element (25).

4. Method for the automatic adaptation of technical plant control according to at least one of the preceding claims, in which the decoupling element (25) has a reactive-current element (27) which eliminates a static component of an output signal of the decoupling element (25).

5. Method for the automatic adaptation of technical plant control according to at least the preceding claim, in which the reactive-current element (27) is adapted in such a way that an output signal of the noise-compensated theoretical decoupling element (25) is reduced to the extent that a change in the first control circuit (30) impacts on the second control circuit (50) and the second control circuit (50) responds accordingly.

6. Method for the automatic adaptation of technical plant control according to at least one of the preceding claims, in which an automatically adaptable decoupling factor V (28) is taken into account (26) in the decoupling element (25) as the at least one parameter (28) automatically adaptable in the online operation of the technical plant.

7. Method for the automatic adaptation of technical plant control according to at least one of the preceding claims, in which a dead band (76) is taken into account in the automatic online adaptation (300) in the theoretical optimum process behaviour (73) of the technical plant and/or in which the automatic online adaptation (300) is terminated when the actual dynamic process behaviour (74, 75) lies in a dead band (76) taken into account in the theoretical optimum process behaviour (73) .

8. Method for the automatic adaptation of technical plant control according to at least one of the preceding claims, in which the technical plant is a power plant, in particular a steam power plant.

9. Method for the automatic adaptation of technical plant control according to at least one of the preceding claims, used for automatic decoupling of the first (30) and the second control circuit (50).

10. Method for the automatic adaptation of technical plant control according to at least one of the preceding claims, used for the adaptation of the control (300) in a commissioning of the technical plant and/or during operation of the technical plant.

11. Automation system with control for a technical plant, in which the method according to at least one of the preceding claims and/or control automatically adapted by the method according to at least one of the preceding claims is implemented.

**Revendications**

1. Procédé d'adaptation automatique d'une régulation d'une installation technique,

- dans lequel on établit (200), pour la régulation de l'installation technique, des circuits de régulation, pour lesquels au moins un premier circuit (30) de régulation et un deuxième circuit (50) de régulation, couplé au premier circuit (30) de régulation par une grandeur de processus influencée conjointement, sont découplés en utilisant un organe (25, 26) de découplage contenant un organe de dérivation ou un organe de temporisation, qui a au moins un paramètre (28) adaptable, et
- on adapte (300) le au moins un paramètre (28) adaptable de l'organe (25, 26) de découplage automatiquement, suivant un fonctionnement en ligne de l'installation technique, à un comportement (74, 75) de processus réel dynamique de l'installation technique, de manière à ce que le premier circuit de régulation influence, à court terme ou à long terme, la grandeur de processus commune, comme grandeur de processus influencée dans le deuxième circuit de régulation, dans lequel

- on détermine (310) en technique de mesure le comportement (74, 75) de processus dynamique réel de l'installation technique,
- on détermine (320) par simulation un comportement (73) de processus optimum théorique de l'installation technique, en utilisant un modèle (29, 22) de l'installation technique et
- on modifie le au moins un paramètre (28) adaptable de l'organe (25, 26) de découplage jusqu'à ce que le comportement (74, 75) de processus dynamique réel de l'installation technique corresponde (330) au comportement (73) de processus optimum théorique de l'installation technique dans une mesure ou suivant une qualité pouvant être donnée à l'avance.

2. Procédé d'adaptation automatique d'une régulation d'une installation technique suivant au moins l'une des revendications précédentes, dans lequel on détermine l'organe (25, 26) de découplage, en utilisant une dynamique d'installation donnée à l'avance.

3. Procédé d'adaptation automatique d'une régulation d'une installation technique suivant au moins l'une des revendications précédentes, dans lequel l'organe (25) de découplage a un organe de compensation du bruit, qui compense au moins une amplification du bruit provenant de l'organe (25) de découplage.

4. Procédé d'adaptation automatique d'une régulation d'une installation technique suivant au moins l'une des revendications précédentes, dans lequel l'organe (25) de découplage a un organe (27) statique, qui élimine une proportion statique d'un signal de sortie de l'organe (25) de découplage.

5. Procédé d'adaptation automatique d'une régulation d'une installation technique suivant au moins la revendication précédentes, dans lequel l'organe (27) statique est adapté de manière à ce qu'un signal de sortie de l'organe (25) de découplage théorique compensé en bruit soit retourné, dans la mesure où une modification du premier circuit (30) de régulation agit sur le deuxième circuit (50) de régulation, et le deuxième circuit (50) de régulation réagit en conséquence.

6. Procédé d'adaptation automatique d'une régulation d'une installation technique suivant au moins l'une des revendications précédentes, dans lequel, pour l'organe (25) de découplage, on prend en compte (26) un facteur V (28) de découplage adaptable automatiquement, comme le au moins un paramètre (28) adaptable automatiquement dans le fonctionnement en ligne de l'installation technique.

7. Procédé d'adaptation automatique d'une régulation d'une installation technique suivant au moins l'une des revendications précédentes, dans lequel on prend en compte, dans l'adaptation (300) automatique en ligne, une bande (76) morte dans le comportement (73) de processus optimum théorique de l'installation technique et/ou dans lequel on fait cesser l'adaptation (300) automatique en ligne, lorsque le comportement (74, 75) de processus dynamique réel se trouve dans une bande (76) morte prise en compte dans le comportement (73) de processus optimum théorique.

8. Procédé d'adaptation automatique d'une régulation d'une installation technique suivant au moins l'une des revendications précédentes, dans lequel l'installation technique est une centrale électrique, notamment une centrale à vapeur.

9. Procédé d'adaptation automatique d'une régulation d'une installation technique suivant au moins l'une des revendications précédentes, utilisé pour un découplage automatique du premier (30) et du deuxième circuits (50) de régulation.

10. Procédé d'adaptation automatique d'une régulation d'une installation technique suivant au moins l'une des revendications précédentes, utilisé pour l'adaptation de la régulation (300), lors d'une mise en service de l'installation technique et/ou pendant un fonctionnement de l'installation technique.

11. Système d'automatisation ayant une régulation d'une installation technique, dans lequel est mis en œuvre le procédé suivant au moins l'une des revendications précédentes et/ou une régulation adaptée automatiquement par le procédé suivant au moins l'une des revendications précédentes.

FIG 1

FIG 2

FIG 3

FIG 4

FIG 5

**EP 2 732 343 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1488863 A2